(19) **Europäisches Patentamt**
**European Patent Office**
**Office européen des brevets**

(11) **EP 4 757 205 A1**

(12) **EUROPEAN PATENT APPLICATION**

(43) Date of publication:
**10.06.2026 Bulletin 2026/24**

(21) Application number: **25221906.8**

(22) Date of filing: **09.12.2025**

(51) International Patent Classification (IPC):
**H04B 7/185** $^{(2006.01)}$

(52) Cooperative Patent Classification (CPC):
**H04B 7/18513**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.12.2024 KR 20240181348
08.12.2025 KR 20250193231**

(71) Applicant: **Thinkware Corporation
Seongnam-si, Gyeonggi-do 13493 (KR)**

(72) Inventors:
- **HAN, Taekyu
  Seongnam-si, Gyeonggi-do 13493 (KR)**
- **LIM, Donghee
  Seongnam-si, Gyeonggi-do 13493 (KR)**
- **KIM, Daewon
  Seongnam-si, Gyeonggi-do 13493 (KR)**

(74) Representative: **BCKIP Part mbB
MK1
Landsbergerstraße 98, 3.Stock
80339 München (DE)**

(54) **APPARATUS AND METHOD FOR INTERNET OF THINGS NON TERRESTRIAL NETWORK**

(57)     In embodiments of the present disclosure, a device of a satellite for providing a non-terrestrial network (NTN) access is provided. The device includes memory comprising instructions, at least one processor, and at least one transceiver. The instructions, when executed by the at least one processor, cause the device to transmit, to a user equipment (UE), a message including information related to a store and forward (S&F) mode, and perform communication with the UE based on the message. The message includes at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

EP 4 757 205 A1

**Description**

**[Technical Field]**

The present disclosure relates generally to a non-terrestrial network (NTN) that provides a wireless communication service through a satellite located in an Earth orbit, rather than a ground base station, or through an aerial vehicle that flies at a high altitude. More specifically, it relates to an apparatus and a method for Internet of Things (IoT) non-terrestrial networks (NTN).

**[Background Art]**

To complement a terrestrial network that provides a wireless communication system, a non-terrestrial network (NTN) has been introduced. The non-terrestrial network may provide a communication service even in a region where it is difficult to establish the terrestrial network or in a disaster situation. In addition, due to a decrease in a satellite launch cost in recent years, an access network environment may be efficiently provided.

**[Disclosure]**

**[Technical Solution]**

In embodiments of the present disclosure, a device of a satellite for providing a non-terrestrial network (NTN) access is provided. The device may comprise memory comprising instructions, at least one processor, and at least one transceiver. The instructions, when executed by the at least one processor, may cause the device to transmit, to a user equipment (UE), a message including information related to a store and forward (S&F) mode, and perform communication with the UE based on the message. The message may include at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

In embodiments of the present disclosure, a user equipment (UE) for performing a non-terrestrial network (NTN) access is provided. The UE may comprise memory comprising instructions, at least one processor, and at least one transceiver. The instructions, when executed by the at least one processor, may cause the UE to receive, from a satellite configured to perform functions of an evolved node B (eNB), a message including information related to a store and forward (S&F) mode, and perform communication with the satellite based on the message. The message may include at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

In embodiments of the present disclosure, a method performed by a satellite for providing a non-terrestrial network (NTN) access is provided. The method may comprise transmitting, to a user equipment (UE), a message including information related to a store and forward (S&F) mode, and performing communication with the UE based on the message. The message may include at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

In embodiments of the present disclosure, a method performed by a user equipment (UE) for performing a non-terrestrial network (NTN) access is provided. The method may comprise receiving, from a satellite configured to perform functions of an evolved node B (eNB), a message including information related to a store and forward (S&F) mode, and performing communication with the satellite based on the message. The message may include at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

**[Description of the Drawings]**

FIG. 1 illustrates a wireless communication system.

FIGS. 2A and 2B illustrate an example of a non-terrestrial network (NTN).

FIG. 3A illustrates an example of a control plane (C-plane).

FIG. 3B illustrates an example of a user plane (U-plane).

FIG. 4 illustrates an example of a resource structure in a time-frequency domain in a wireless communication system.

FIG. 5 illustrates an example of a store and forward (S&F) mode in an Internet of Things (IoT) non-terrestrial network (NTN).

FIG. 6 illustrates a connection state of a satellite and a connection state of a user equipment (UE) in an S&F mode.

FIG. 7 illustrates signaling for a pre-operation of UE in an S&F mode.

FIG. 8A illustrates an example of a paging procedure in an S&F mode.

FIG. 8B illustrates an example of a discontinuous reception (DRX) operation in an S&F mode.

FIG. 9 illustrates an example of components of UE.

FIG. 10 illustrates an example of components of a satellite.

[Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a signal (e.g., a signal, information, a message, or signaling), terms referring to a resource (e.g., a symbol, a slot, a subframe, a radio frame, a subcarrier, a resource element (RE), a resource block (RB), a bandwidth part (BWP), or an occasion), terms referring for a calculation state (e.g., a step, an operation, or a procedure), terms referring to data (e.g., a packet, a user stream, information, a bit, a symbol, or a codeword), terms referring to a channel, terms referring to a network entity, terms referring to a device component, and the like, used in the following description are exemplified for convenience of explanation. Therefore, the present disclosure is not limited to terms to be described below, and another term having an equivalent technical meaning may be used.

In the following description, a physical channel and a signal may be used interchangeably with data or a control signal. For example, a physical downlink shared channel (PDSCH) is a term referring to a physical channel through which data is transmitted, but the PDSCH may also be used to refer to data. That is, in the present disclosure, the expression 'transmitting a physical channel' may be interpreted equally to the expression 'transmitting data or a signal through a physical channel'.

Hereinafter, in the present disclosure, upper signaling means a signal transmission method transmitted from a base station to a terminal using a downlink data channel of a physical layer, or from a terminal to a base station using an uplink data channel of a physical layer. The upper signaling may be understood as radio resource control (RRC) signaling or a MAC control element (hereinafter, referred to as 'CE").

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

In the present disclosure, a signal quality may be, for example, at least one of reference signal received power (RSRP), beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), error vector magnitude (EVM), a bit error rate (BER), and a block error rate (BLER). In addition to the above-described example, of course, other terms having an equivalent technical meaning or other metrics indicating a channel quality may be used. Hereinafter, in the present disclosure, high signal quality means a case in which a signal quality value related to a signal size is large or a signal quality value related to an error rate is small. When the signal quality is high, it may mean that a smooth wireless communication environment is guaranteed. In addition, an optimal beam may mean a beam having the highest signal quality among beams.

The present disclosure describes various embodiments using terms used in a portion of communication standards (e.g., 3rd Generation Partnership Project (3GPP) and European Telecommunications Standards Institute (ETSI)), but this is only an example for explanation. Various embodiments of the present disclosure may be easily modified and applied in another communication system.

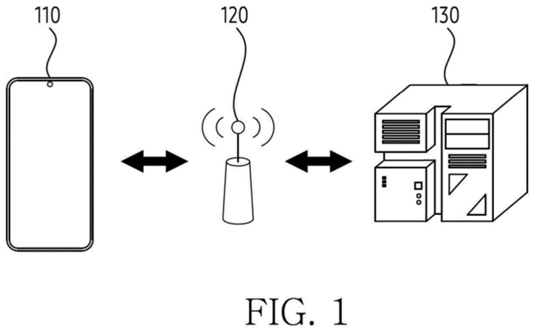

FIG. 1 illustrates a wireless communication system.

Referring to FIG. 1, FIG. 1 illustrates a terminal 110 and a base station 120 as a portion of nodes that utilize a wireless channel in a wireless communication system using an evolved Universal Mobile Telecommunications System (UMTS) radio access network (EUTRAN) or New Radio (NR), as a wireless interface of Radio Access Technology (RAT). FIG. 1 illustrates only one base station, but the wireless communication system may further include another base station identical or similar to the base station (e.g., LTE eNB or NR gNB) 120.

The terminal 110, which is an apparatus used by a user, communicates with the base station 120 through a wireless channel. A link from the base station 120 to the terminal 110 is referred to as a downlink (DL), and a link from the terminal 110 to the base station 120 is referred to as an uplink (UL). In addition, although not illustrated in FIG. 1, the terminal 110 and another terminal may perform communication with each other through a wireless channel. At this time, a device-to-device link (D2D) between the terminal 110 and the other terminal is referred to as a sidelink, and the sidelink may be used interchangeably with a PC5 interface. In some other embodiments, the terminal 110 may be operated without user involvement. According to an embodiment, the terminal 110, which is an apparatus that performs machine type communication (MTC), may not be carried by a user. In addition, according to an embodiment, the terminal 110 may be a narrowband (NB)-Internet of things (IoT) device.

In describing the systems and methods in the present specification, the terminal 110 may be an electronic device used to communicate voice and/or data to the base station 120, and the base station 120 may, in turn, communicate with a network (e.g., a public exchange telephone network (PSTN), the Internet, and the like) of devices.

In addition, the terminal 110 may be referred to as a terminal, a 'user equipment (UE)', a 'vehicle', a 'customer premises equipment (CPE)', a 'mobile station', a 'subscriber station', a 'remote terminal', a 'wireless terminal', an 'electronic device', a 'user device', an 'access terminal', a 'mobile terminal', a 'remote station', a 'user terminal', a 'subscriber unit', a 'mobile device', or another term having an equivalent technical meaning thereto.

Additionally, examples of terminals 110 include cellular phones, smart phones, personal digital assistants (PDAs), laptop computers, netbooks, e-readers, wireless modems, and the like. In 3GPP standards, the terminal 110 is typically referred to as UE. However, since the scope disclosed in the present specification should not be limited to the 3GPP standards, terms "UE" and "terminal" may be used interchangeably in the present specification to mean a more general term "wireless communication device". The UE may also more generally be referred to as a terminal device.

The base station 120 is a network infrastructure that provides wireless access to the terminal 110. The terminal 110 has coverage defined based on a distance at which a signal may be transmitted. In the 3GPP standards, the base station 120 may generally be referred to as a 'node B', an 'evolved node B (eNodeB, eNB)', a '5th generation node', a 'next generation nodeB (gNB)', a 'home enhanced or evolved node B (HeNB)', an 'access point (AP)', a 'wireless point', a 'transmission/reception point (TRP)', or another term having an equivalent technical meaning thereto.

Since the scope disclosed in the present specification should not be limited to the 3GPP standards, terms "base station", "node B", "eNB", and "HeNB" may be used interchangeably in the present specification to mean a more general term "base station". In addition, the term "base station" may be used to indicate an access point. The access point may be an electronic device that provides access to a network (e.g., a local area network (LAN), the Internet, and the like) for wireless communication devices. The term "communication device" may be used to indicate both a wireless communication device and/or a base station. The eNB or the gNB may also more generally be referred to as a base station device.

The base station 120 may communicate with a core network entity 130. For example, the core network entity 130 may include a mobility management entity (MME) responsible for a control plane, such as a terminal 110 access and mobility control function, and a serving gateway (S-GW) responsible for a control function for user data.

The terminal 110 may perform beamforming with the base station 120. The terminal 110 and the base station 120 may transmit and receive a wireless signal in a relatively low frequency band (e.g., a frequency range 1 (FR 1) of NR). In addition, the terminal 110 and the base station 120 may transmit and receive a wireless signal in a relatively high frequency band (e.g., FR 2 (or, FR 2-1, FR 2-2, FR 2-3), or FR 3 of NR), a millimeter wave (mmWave) band (e.g., 28 GHz, 30 GHz, 38 GHz, or 60 GHz)). In order to improve a channel gain, the terminal 110 and the base station 120 may perform the beamforming. Herein, the beamforming may include transmission beamforming and reception beamforming. The terminal 110 and the base station 120 may assign directivity to a transmission signal or a reception signal. To this end, the terminal 110 and the base station 120 may select serving beams through a beam search or a beam management procedure. After the serving beams are selected, subsequent communication may be performed through a resource that is in a Quasi Co-Location (QCL) relationship with a resource transmitting the serving beams.

If large-scale characteristics of a channel transferring a symbol on a first antenna port may be inferred from a channel transferring a symbol on a second antenna port, the first antenna port and the second antenna port may be evaluated to be in the QCL relationship. For example, the large-scale characteristics may include at least one of a delay spread, a doppler spread, a doppler shift, an average gain, an average delay, and a spatial receiver parameter.

Both the terminal 110 and the base station 120 may perform beamforming, but embodiments of the present disclosure are not necessarily limited thereto. In some embodiments, the terminal 110 may or may not perform beamforming. In addition, the base station 120 may or may not perform beamforming. That is, only one of the terminal 110 and the base station 120 may perform beamforming, or both the terminal 110 and the base station 120 may not perform beamforming.

In the present disclosure, a beam, which means a spatial flow of a signal in a wireless channel, may be formed by one or more antennas (or antenna elements), and this formation process may be referred to as beamforming. The beamforming may include at least one of analog beamforming or digital beamforming (e.g., Precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, as a configuration for each reference signal, an information element (IE) such as a CSI-RS resource or an SRS-resource may be used, and this configuration may include information associated with the beam. The information associated with the beam may mean whether a corresponding configuration (e.g., a CSI-RS resource) uses the same spatial domain filter as another configuration (e.g., another CSI-RS resource in the same CSI-RS resource set), or another spatial domain filter, or which reference signal is quasi-co-located (QCL) with, and if it is QCL, which type (e.g., QCL type A, B, C, and D).

Hereinafter, to describe embodiments, a terminal may be referred to as UE 110, and a base station may be referred to as an eNB 120 or a gNB 120. Hereinafter, in the present disclosure, the eNB 120 is described as an example as a node that provides an access network in order to describe IoT NTN for IoT UE, but it is of course that it may be applied to the gNB 120 in the same or similar manner.

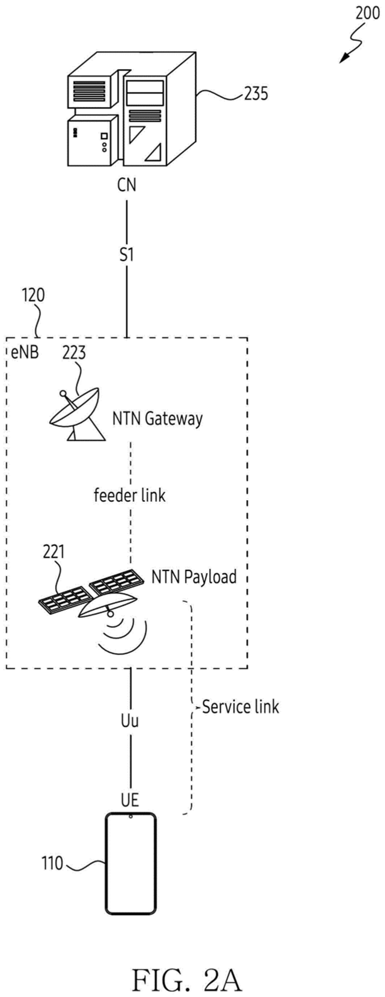

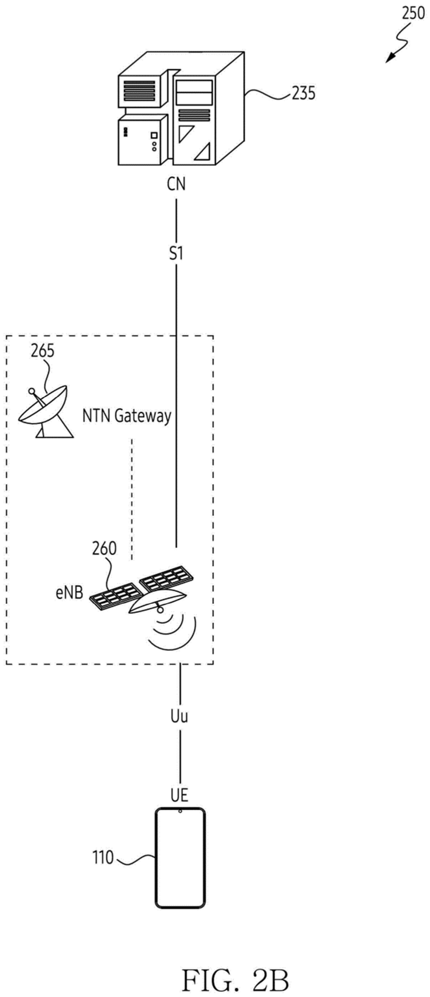

FIGS. 2A and 2B illustrate an example of a non-terrestrial network (NTN). In FIG. 2A, an example of the non-terrestrial network (NTN) using a transparent satellite is illustrated. In FIG. 2B, an example of the non-terrestrial network (NTN) using a regenerative satellite is illustrated. The NTN refers to an access network that provides non-terrestrial access to UE (e.g., the UE 110) through an NTN payload mounted on an airborne or space-borne NTN vehicle and an NTN gateway. The NG-RAN may include one or more eNBs (e.g., the eNB 120).

Referring to FIG. 2A, NTN 200 indicates a network environment according to the transparent satellite. The NTN 200, as the eNB 120, may include an NTN payload 221 and an NTN gateway 223. The NTN payload 221 is a network node mounted on a phase or a high altitude platform station (HAPS) that provides a connection function between a service link (described later) and a feeder link (described later). The NTN gateway 223 is an earth station disposed on a surface of the earth that provides a connection to the NTN payload 221 using the feeder link. The NTN gateway 223 is a transport network layer (TNL) node. The NTN 200 may provide the UE 110 with non-terrestrial NR access. The NTN 200 may provide the UE 110 with the non-terrestrial NR access through the NTN payload 221 and the NTN gateway 223. A link between the NTN payload 221 and the UE 110 may be referred to as the service link. A link between the NTN gateway 223 and the NTN payload 221 may be referred to as the feeder link. The feeder link may correspond to a wireless link.

The NTN payload 221 may receive wireless protocol data from the UE 110 through the service link. The NTN payload 221 may transparently transmit the wireless protocol data to the NTN gateway 223 through the feeder link. Accordingly, the NTN payload 221 and the NTN gateway 223 may be seen as one eNB 120 from a perspective of the UE 110. The NTN payload 221 and the NTN gateway 223 may perform communication with the UE 110 through a Uu interface, which is a general wireless protocol. That is, the NTN payload 221 and the NTN gateway 223 may perform wireless protocol communication with the UE 110 like the one eNB 120. The NTN gateway 223 may perform communication with a core network entity 235 (e.g., a mobility management entity (MME) or a serving gateway (S-GW)) through an S1 interface.

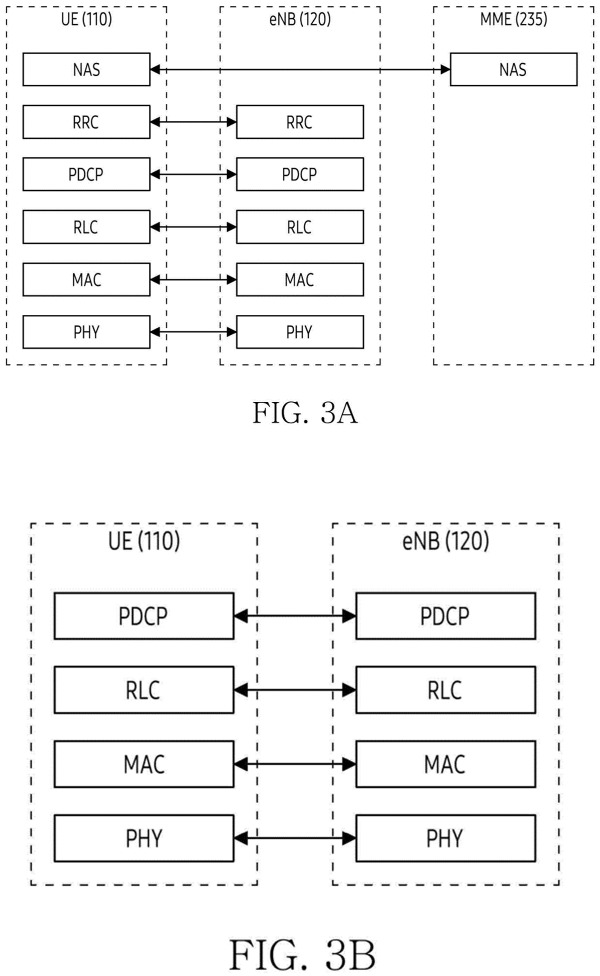

According to an embodiment, the NTN payload 221 and the NTN gateway 223 may use a wireless protocol stack in a control plane of FIG. 3A to be described later. In addition, according to an embodiment, the NTN payload 221 and the NTN gateway 223 may use a wireless protocol stack in a user plane of FIG. 3B.

In FIG. 2A, one NTN payload 221 and one NTN gateway 223 included in the eNB 120 have been described, but embodiments of the present disclosure are not limited thereto. For example, eNB may include a plurality of NTN payloads. In addition, for example, an NTN payload may be provided by a plurality of eNBs. That is, an implementation scenario illustrated in FIG. 2A is an example and does not limit embodiments of the present disclosure.

Referring to FIG. 2B, an NTN 250 indicates a network environment according to the regenerative satellite. The NTN 250 may include a satellite 260 operating as the eNB 120. The satellite 260 indicates a space-borne vehicle equipped with a regenerative payload communication transmitter disposed in a low-earth orbit (LEO), a medium-earth orbit (MEO), or a geostationary earth orbit (GEO). The satellite 260 may be referred to as a regenerative payload or a regenerative satellite. The satellite 260 may indicate a payload configured to convert and amplify an uplink RF signal before transmitting the uplink RF signal to a downlink, and the conversion of the signal may mean digital processing capable of including demodulation, decoding, re-encoding, re-modulation and/or filtering. The NTN 250 may include an NTN gateway 265, which is an entity connected to the satellite 260 and disposed on the ground. The NTN gateway 265 is an earth station,

disposed on a surface of the earth, that provides a connection to the satellite 260 using the feeder link. The NTN 250 may provide the UE 110 with the non-terrestrial NR access. The NTN 250 may provide the UE 110 with the non-terrestrial NR access through the satellite 260 and the NTN gateway 265.

The satellite 260 may be configured to regenerate signals received from the terminal 110 or the Earth station (e.g., the NTN gateway 265). The Uu interface may be defined between the satellite 260 and the terminal 110. A satellite radio interface (SRI) on the feeder link may be defined between the satellite 260 and the NTN gateway 265. Although not illustrated in FIG. 2B, the satellite 260 may provide inter-satellite links (ISL) between satellites. The ISL may be a transmission link between satellites, and the ISL may be a 3GPP, or a wireless interface (e.g., an X2 interface or an XN interface) or an optical interface, in which the 3GPP is not defined. The satellite 260 may perform communication with the core network entity 235 (e.g., the MME or the S-GW) through the S1 interface, based on the NTN gateway 265. According to an embodiment, the satellite 260 may use the wireless protocol stack in the control plane of FIG. 3A to be described later. In addition, according to an embodiment, the satellite 260 may use the wireless protocol stack in the user plane of FIG. 3B.

In FIG. 2B, the satellite 260 operating as the eNB 120 has been described, but embodiments of the present disclosure are not limited thereto. The eNB 120 according to embodiments may be implemented as a distributed deployment using a centralized unit (CU) configured to perform a function of upper layers (e.g., a packet data convergence protocol (PDCP), or a radio resource control (RRC)) of an access network and a distributed unit (DU) configured to perform a function of lower layers. An interface between the CU and the distributed unit (DU) may be referred to as an F1 interface. The centralized unit (CU) may be in charge of a function of a layer upper than the DU by being connected to one or more DUs. For example, the CU may be in charge of a function of radio resource control (RRC) and packet data convergence protocol (PDCP) layers, and the DU and a radio unit (RU) may be in charge of a function of a lower layer. The DU may be in charge of a function of radio link control (RLC), media access control (MAC), and physical (PHY) layers. In this distributed deployment, the satellite 260 may be used as the CU or the DU constituting the eNB 120.

FIG. 3A illustrates an example of a control plane (C-plane). Hereinafter, at least a portion of descriptions of an eNB 120 may be understood as pertaining to a satellite 260.

Referring to FIG. 3A, in the C-plane, UE 110 and AMF 235 may perform non-access stratum (NAS) signaling. In the C-plane, the UE 110 and the eNB 120 may perform communication according to a protocol specified in each of a RRC layer, a PDCP layer, a RLC layer, a MAC layer, and a PHY layer.

In an NTN access, a main function of the RRC layer may include at least a portion of the following functions.

- Broadcasting access stratum (AS) and NAS related system information
- Paging
- Establishment, maintenance, and release of an RRC connection between the UE and an access network, including, more specifically, control over RLC, MAC, and PHY:

    - Addition, modification and release of Carrier Aggregation
    - Addition, modification and release of dual connectivity between NR or E-UTRA and NR.

- Security function including Key Management;
- Establishment, configuration, maintenance and release of Signaling Radio Bearer (SRB) and Data Radio Bearer (DRB)
- Movement function including:

    - Transferring handover and context;
    - Control UE cell selection and reselection and cell selection and reselection;
    - Mobility between RATs.

- Quality of service (QoS) management function;
- UE measurement report and report control;
- Radio link failure detection and recovery
- Message transmission from/to UE to/from NAS.

In the NTN access, a main function of the PDCP layer may include at least a portion of the following functions.

- Header compression and decompression: ROHC only
- Transfer of user data
- In-sequence delivery of upper layer PDUs
- Out-of-sequence delivery of upper layer PDUs
- Duplicate detection of lower layer SDUs

- Retransmission of PDCP SDUs
- Ciphering and deciphering
- Timer-based SDU discard in uplink.

In the NTN access, a main function of the RLC layer may include at least a portion of the following functions.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the NTN access, the MAC layer may be connected to multiple RLC layer devices configured in a terminal, and a main function of the MAC may include at least a portion of the following functions.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

In NTN access, each entity (e.g., the terminal 110, or the eNB 120) in the physical layer may perform channel coding and modulating upper layer data, converting into an OFDM symbol and transmitting it to a wireless channel, or demodulating and channel decoding the OFDM symbol received via the wireless channel and transmitting it to the upper layers.

FIG. 3B illustrates an example of a user plane (U-plane). Hereinafter, at least a portion of descriptions of the eNB 120 may be understood as pertaining to the satellite 260.

Referring to FIG. 3B, in the U-plane, the UE 110 and the eNB 120 may perform communication according to a protocol specified in each of the PDCP layer, the RLC layer, the MAC layer, and the PHY layer. For the PDCP layer, the RLC layer, the MAC layer, and the PHY layer, the description regarding FIG. 3A may be referred to.

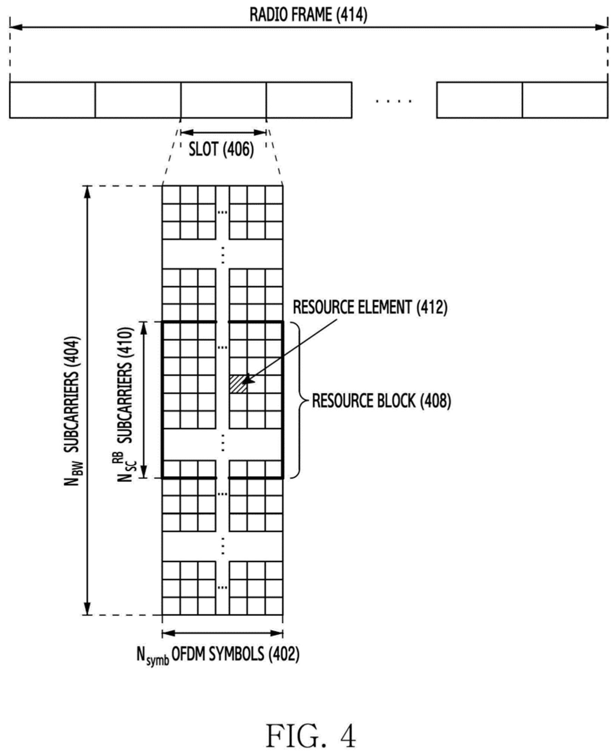

FIG. 4 illustrates an example of a resource structure of a time-frequency domain supported by a wireless communication system to which an embodiment proposed in the present specification may be applied. In FIG. 4, a resource structure of an LTE network for IoT NTN is described as an example, but embodiments of the present disclosure are not limited thereto. It is of course that signaling and related operations according to embodiments of the present disclosure may be applied to an NR system in the same or similar manner.

Referring to FIG. 4, a horizontal axis indicates a time domain, and a vertical axis indicates a frequency domain. A minimum transmission unit in the time domain is an OFDM symbol, and one slot 406 (e.g., 7 in the LTE system) may be configured with $N_{symb}$ OFDM symbols 402. Referring to FIG. 4, in the wireless communication system to which the present invention is applied, one radio frame 414 may be defined as having a length of 10 ms, which is configured with 10 subframes having the same length of 1 ms. Additionally, one radio frame 414 may be divided into 5 ms half-frame, and each half-frame includes 5 subframes. In FIG. 4, the slot 406 is configured with 14 OFDM symbols, but a length of the slot may vary according to subcarrier spacing. In the wireless communication system in which an invention proposed in the present specification may be applied, a radio resource supported by the wireless communication system is configured with symbols, which are a plurality of time resources, and sub-carriers, which are a plurality of frequency resources, and each time resource and frequency resource may be represented as a two-dimensional resource grid. In FIG. 4, one square, which is the smallest physical resource configured with one sub-carrier and one symbol in the resource grid, is referred to as a resource element (RE) 412.

In the wireless communication system in which the invention proposed in the present specification may be applied, a minimum transmission unit in the frequency domain is a subcarrier, and a carrier bandwidth that configures a resource grid may be configured with NBW subcarriers 404. A basic unit of a resource in a time-frequency domain is the resource element (RE) 412, and it may be represented by an OFDM symbol index and a subcarrier index. A resource block (RB) 408 may include a plurality of resource elements 412. In the wireless communication system in which the invention proposed in the present specification may be applied, the resource block (RB) 408 (or a physical resource block (PRB)) may be defined with Nsymb (e.g., 7) consecutive OFDM symbols in the time domain and NSCRB (e.g., 12) consecutive subcarriers in the frequency domain. A data rate may increase in proportion to the number of RBs scheduled to a terminal. In a case of a frequency division duplex (FDD) system in which a downlink and an uplink are operated by being distinguished by frequencies, a downlink transmission bandwidth and an uplink transmission bandwidth may be different from each other. sA channel bandwidth indicates a radio frequency (RF) bandwidth corresponding to a system transmission bandwidth. For example, a channel bandwidth may be one of 1.4 MHz (e.g., 6 PRBs), 3 MHz (e.g., 15 PRBs), 5 MHz (e.g., 25 PRBs), 10 MHz (e.g., 50 PRBs), 15 MHz (e.g., 75 PRBs), and 20 MHz (e.g., 100 PRBs).

E-UTRAN supports radio access over non-terrestrial networks for not only general UEs, but also bandwidth limited (BL) UEs, UEs in enhanced coverage and NB-IoT UEs. Support for non-terrestrial networks encompasses platforms that provide radio access through Geosynchronous orbits (GSO), Non-Geosynchronous Orbit (NGSO), which includes Low-Earth Orbit (LEO) and Medium Earth Orbit (MEO) or High Altitude Platform Systems (HAPS).

In the transparent payload mode, the NTN gateway and the NTN payload (i.e., satellite) together perform the role of the eNB, and in the regenerative payload mode, the NTN payload (i.e., satellite) can perform the role of the eNB.

The transparent NTN payload transparently forwards the radio protocol received from the UE (via the service link) to the NTN Gateway (via the feeder link) and vice-versa. The regenerative payload terminates the Uu interface (via the service link), S1 and X2 intefaces. An NTN Gateway may serve multiple transparent or regenerative NTN payloads. A transparent or regenerative NTN payload may be served by multiple eNBs. A regenerative NTN payload may terminate one or more inter-satellite links toward other regenerative payloads. As a non-limiting example, the transparent NTN-payload may change the carrier frequency, before re-transmitting it on the service link, and vice versa (respectively on the feeder link). In NTN, a Tracking Area corresponds to a fixed geographical area. In NTN, the same value is used in AS and NAS when the satellite ID referring to the same satellite.

Three types of service links are supported:

- Earth-fixed: provisioned by beam(s) continuously covering the same geographical areas all the time (e.g., the case of GSO satellites);
- Quasi-Earth-fixed: provisioned by beam(s) covering one geographic area for a limited period of time and a different geographic area during another period of time (e.g., the case of NGSO satellites generating steerable beams);
- Earth-moving: provisioned by beam(s) whose coverage area slides over the Earth surface (e.g., the case of NGSO satellites generating fixed or non-steerable beams).

With NGSO satellites, the eNB can provide either quasi-Earth-fixed cell coverage or Earth-moving cell coverage, while eNB operating with GSO satellites can provide Earth fixed cell coverage or quasi-Earth-fixed cell coverage.

Store and forward mode provides communication service to the UE when the serving satellite has a discontinuous connection to the ground network and such connection is not available when the satellite is interacting with the UE. The eNB can indicate whether a cell is operating in store and forward mode.

The Store and Forward Satellite operation mode refers to an operation mode that provides to the UE a communication service when the serving satellite has a discontinuous connection to the NTN gateway and connection to the NTN gateway is not available when the satellite is interacting with the UE.

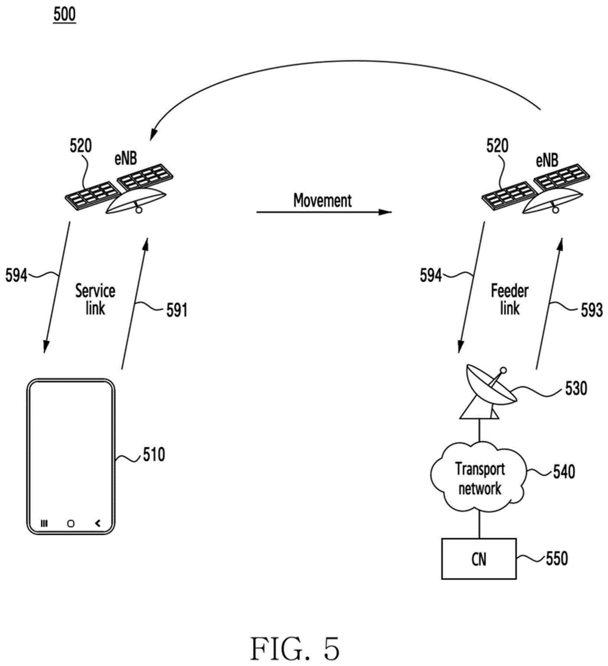

FIG. 5 illustrates an example 500 of a store and forward (S&F) mode in an Internet of Things (IoT) non-terrestrial network (NTN).

Referring to FIG. 5, UE 510 may perform communication with a satellite 520. The UE 510 may be referred to as the terminal 110 of FIG. 1. The satellite 520 may be referred to as a base station 120 or a network entity that performs at least a portion of functions of the base station 120. According to an embodiment, the satellite 520 may be an eNB that provides IoT NTN. The satellite 520 may provide E-UTRAN for an IoT device (e.g., the UE 510). The UE 510 may access the satellite 520 through the E-UTRAN. A connection between the satellite 520 and the UE 510 may be referred to as a service link. The satellite 520 may move along a specified orbit. According to the movement of the satellite 520, the satellite 520 may be connected to a network entity (hereinafter, referred to as a ground segment) (e.g., an NTN gateway 530) disposed on the ground. The connection between the satellite 520 and the NTN gateway 530 may be referred to as a feeder link. The NTN gateway 530 may be connected to a core network 550 through a transport network 540. As the satellite 520 moves repeatedly along the specified orbit, the service link may or may not be available. As the satellite 520 moves repeatedly along the specified orbit, the feeder link may be available or unavailable.

The satellite 520 may support the store and forward (S&F) mode. The store and forward (S&F) mode may indicate an operation mode of a system capable of satellite-access. A delay-tolerant communication service may be provided through the store and forward (S&F) mode. When a satellite connection is intermittently or temporarily unavailable (e.g., in a case of serving the UE 510 positioned in a coverage where a feeder link to the ground segment (e.g., the NTN gateway 530) is not simultaneously active), a level of service that stores and forwards data may be provided. According to an embodiment, the satellite 520 may be used to provide a delay-tolerant IoT service through a non-geostationary satellite orbit (NGSO) (e.g., low earth orbit (LEO)). According to an embodiment, the satellite 520 may provide satellite access to the UE 510 that does not have a global navigation satellite system (GNSS) receiver or has difficulty accessing a GNSS service. As a non-limiting example, the satellite 520 may perform UE-satellite-UE communication with the UE 510. For example, the UE 510 may perform communication with the satellite 520 without communicating with the ground segment (e.g., the NTN gateway 530) in order to avoid long delays and limited data rates and to reduce resource consumption. The S&F mode may be used for the delay-tolerant service and/or an interruption-tolerant service. For example, in a 3GPP context, a short message service (SMS) may be used for the S&F mode, and an end-to-end connection between endpoints (e.g., the UE 510 and an application server) may not be required. Only a connection between an endpoint (e.g., the UE 510) and an intermediate node (e.g., a short message service center (SMSC)) may be required.

In the S&F mode, the service link between the UE 510 and the satellite 520 may repeat an available state and an unavailable state. The service link between the UE 510 and the satellite 520 being in the available state indicates that a position of the satellite 520 belongs to a range (hereinafter, a service-available orbital section) in which the satellite 520 may serve a region (e.g., a footprint) where the UE 510 is positioned on an orbit of the satellite 520. The service link between the UE 510 and the satellite 520 being in the unavailable state indicates that a position of the satellite 520 belongs to a range (hereinafter, a service-unavailable orbital section) in which the satellite 520 has difficulty in serving the region (e.g., the footprint) where the UE 510 is positioned on the orbit of the satellite 520. In the S&F mode, the feeder link between the satellite 520 and the ground segment (e.g., the NTN gateway 530) may repeat between an available state and an unavailable state. The feeder link between the satellite 520 and the ground segment (e.g., the NTN gateway 530) being in the available state indicates that a position of the satellite 520 belongs to a range (hereinafter, a feeder-available orbital section) in which the satellite 520 may serve a region (e.g., a footprint) where the ground segment (e.g., the NTN gateway 530) is positioned on the orbit of the satellite 520. The feeder link between the satellite 520 and the ground segment (e.g., the NTN gateway 530) being in the unavailable state indicates that a position of the satellite 520 belongs to a range (hereinafter, a feeder-unavailable orbital section) in which the satellite 520 has difficulty in serving a region (e.g., the footprint) where the ground segment (e.g., the NTN gateway 530) is positioned on the orbit of the satellite 520. For the UE 510, availability of the service link and availability of the feeder link may not always occur simultaneously. For example, even if a state of the service link changes from the available state to the unavailable state, a state of the feeder link does not necessarily change. For example, even if the state of the feeder link changes from the available state to the unavailable state, the state of the service link does not necessarily change.

According to an embodiment, the UE 510 may transmit a signal. The signal may be mobile originated (MO) data. For example, in operation 591, the UE 510 may transmit uplink data (e.g., PUSCH) to the satellite 520 when the service link is in the available state. The satellite 520 may receive the uplink data from the UE 510. Since the feeder link is not in the available state, the satellite 520 may store the uplink data. Thereafter, the satellite 520 may move. According to the movement, a state of the feeder link may change from the available state to the unavailable state. In operation 592, the satellite 520 may transmit the uplink data through a network entity (e.g., the NTN gateway 530) disposed on the ground. The uplink data may be transmitted to a data network through the core network 550. Hereinafter, a service in which a message originating from the UE 510 is transmitted through the satellite 520 in the S&F mode may be referred to as a mobile originated (MO) service.

According to an embodiment, the satellite 520 may transmit a signal to the UE 510. The signal may be mobile terminated (MT) data. For example, in operation 593, while the feeder link is available, the satellite 520 may receive data from an external device (e.g., a server, or another UE) through the data network and the core network 550 (e.g., UPF). The satellite 520 may move. According to the movement of the satellite 520, a state of the feeder link may change from the available state to the unavailable state. According to the movement of the satellite 520, a state of the service link between the satellite 520 and the UE 510 may change from the unavailable state to the available state. In operation 594, the satellite 520 may transmit downlink data (e.g., PDSCH) to the UE 510 when the service link is in the available state. Hereinafter, a service in which a message is delivered to the UE 510 through the satellite 520 in the S&F mode may be referred to as a mobile terminated (MT) service.

According to embodiments of the present disclosure, a network (e.g., an eNB) may indicate store-and-forward mode to a terminal (e.g., a UE) via a SIB1 message. For example, the SIB1 message may include an 'sf-OperationMode' IE. The IE may indicates that the cell is operating in Store and Forward mode. If the field is present, UEs supporting the Store and Forward operation ignores *cellBarred-NTN* and *cellBarred*. The IE may inidcate to the value 'barred' or the value 'notBarred'. The value 'barred' means the cell is barred for NTN connectivity with the Store and Forward operation, as defined in TS 36.304. The value 'notBarred' means the cell allows UEs supporting the Store and Forward operation to access. If the field is absent, the SIB1 message indicates that the NTN cell is operating in normal mode, i.e., not in the Store and Forward mode.

According to embodiments of the present disclosure, a network (e.g., an eNB) may indicate time information related to store-and-forward mode to a terminal (e.g., a UE) via a SIB31. The SIB31 may include satellite assistance information for a serving cell. As the satellite assistance information, ephemeris information, satellite ID, and reference position information may be included in the SIB31. *In an embodiment,* the SIB31 message may include switching time information (e.g., t-ModeSwitching IE). If *sf-OperationMode* is present in *SIB1,* this field indicates the time information on when an NTN cell is going to switch from the Store and Forward Satellite operation mode to the normal mode; otherwise, this field indicates the time information on when an NTN cell is going to switch from the normal mode to the Store and Forward Satellite operation mode.

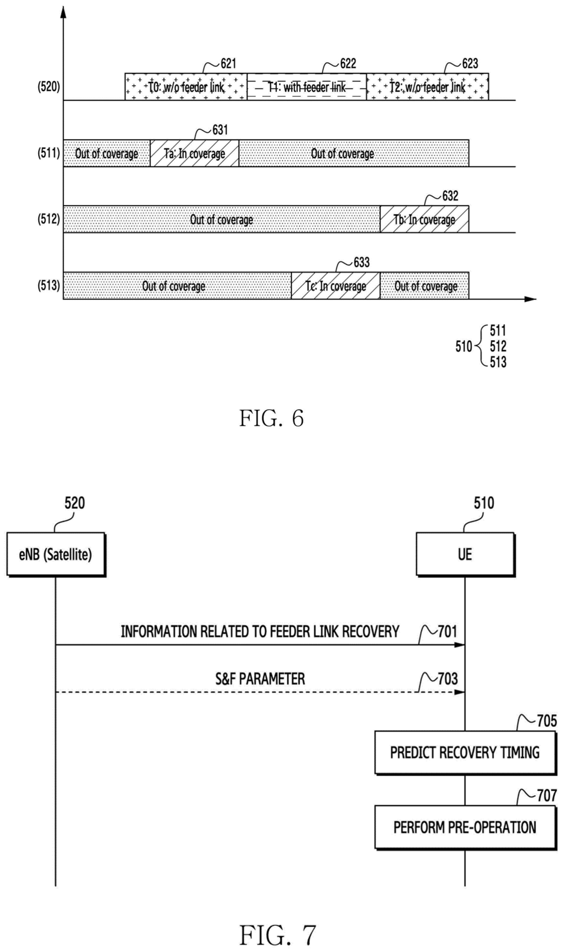

FIG. 6 illustrates a connection state of a satellite (e.g., a satellite 520) and a connection state of a user equipment (UE) in an S&F mode. In FIG. 6, in order to describe various examples according to a region where the UE is positioned, a first UE 511, a second UE 512, and a third UE 513 are described as examples, and descriptions regarding the UE 510 of FIG. 5 may be referenced for each UE.

Referring to FIG. 6, the satellite 520 may move. As the satellite 520 moves, a state of a feeder link between the satellite 520 and a ground segment (e.g., an NTN gateway 530) may repeat an available state and an unavailable state. For example, in a first time interval 621, the feeder link of the satellite 520 may be in the unavailable state. The satellite 520 may operate without the feeder link. For example, in a second time interval 622, the feeder link of the satellite 520 may be in the available state. The satellite 520 may operate with the feeder link. For example, in a third time interval 623, the feeder link of the satellite 520 may be in the unavailable state. The satellite 520 may operate without the feeder link. According to whether the feeder link of the satellite 520 is in the available state or the unavailable state, an operation of UE (e.g., the first UE 511, the second UE 512, or the third UE 513) in an RRC idle state may vary. For example, the satellite 520 may not have an opportunity to access the ground segment (e.g., the NTN gateway 530) before the first UE 511 is in an in-coverage state 631. In this case, the first UE 511 may not perform paging monitoring. The first UE 511 may skip monitoring for a paging message from the satellite 520. For example, the satellite 520 may access the ground segment (e.g., the NTN gateway 530) in advance before the second UE 512 is in an in-coverage state 632. In this case, even if the satellite 520 is in the S&F mode, the second UE 512 may perform monitoring for the paging message from the satellite 520. For example, while the feeder link of the satellite 520 is in the available state, the third UE 513 may be in the available state. The third UE 513 may perform a normal operation (e.g., paging monitoring regardless of the satellite access).

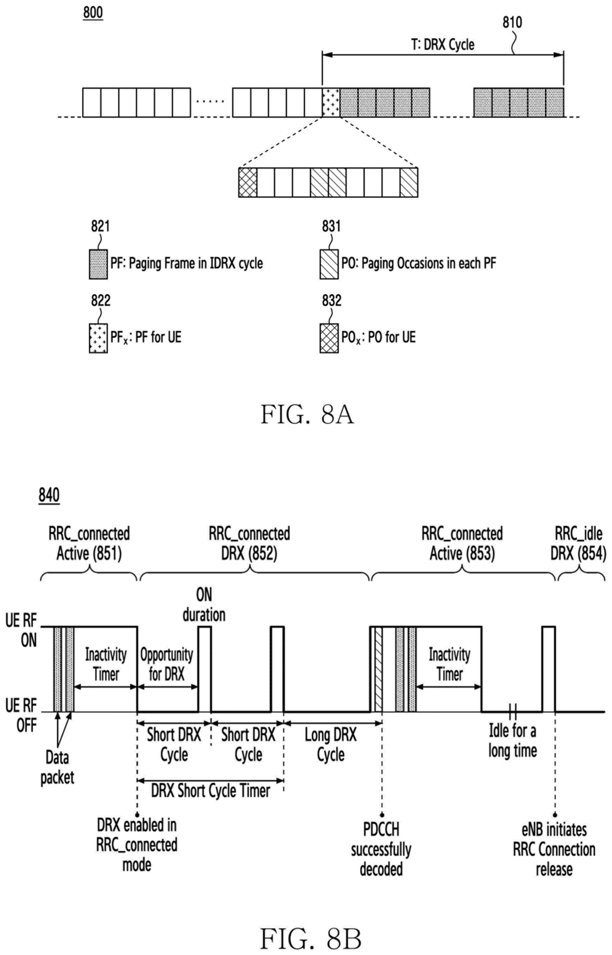

In the RRC idle state, an operation of UE (e.g., the first UE 511, the second UE 512, or the third UE 513) may be determined according to a current feeder link state and a past feeder link state during which the UE is out of coverage (i.e., out-of-coverage). For example, in a case that the satellite 520 once recovers the feeder link, the UE (e.g., the first UE 511, the second UE 512, or the third UE 513) may monitor a paging message and may perform data reception. In a case that the satellite 520 has no opportunity to recover the feeder link, the UE may skip paging message monitoring. Hereinafter, through FIG. 7, FIG. 8A, and FIG. 8B, a UE operation in the RRC idle state according to the current feeder link state and the past feeder link state will be described in detail. For the UE (e.g., the first UE 511, the second UE 512, or the third UE 513) in the RRC idle state when the satellite 520 is in the S&F mode, mobile originated (MO) data transmission may be possible. The UE (e.g., the first UE 511, the second UE 512, or the third UE 513) in the RRC idle state may perform an initial network access and data transmission (e.g., in a case of being configured to include a control plane early data transmission (EDT)/cellular IoT (CIoT) operation) when the satellite 520 is in the S&F mode.

FIG. 7 illustrates signaling for a pre-operation of UE (e.g., UE 510) in an S&F mode. A satellite 520 may be configured to perform functions of an eNB. As an example, the eNB may be disposed on a board of the satellite 520, and entities of a core network (e.g., a core network 550) may be disposed on the ground. As an example, a portion of the eNB and the entities of the core network (or a portion of a particular entity (e.g., a mobile management entity (MME))) may be disposed on the board of the satellite 520, and other entities of the core network may be disposed on the ground.

Referring to FIG. 7, in operation 701, the satellite 520 may transmit information related to feeder link recovery to the UE 510. For example, assuming the second UE 512 of FIG. 6, even if a feeder link of the satellite 520 is in an unavailable state, a service link between the second UE 512 and the satellite 520 is valid. Since the service link is valid, the second UE 512 may perform operations required in an RRC idle state. Since the second UE 512 has an expectation of recovery of the feeder link, it may perform the operations (e.g., paging monitoring, and DRX) required in the RRC idle state. For an operation of the second UE 512 in the RRC idle state, the satellite 520 may provide the second UE 512 with information related to the feeder link recovery.

## 1. Signaling

Information related to feeder link recovery may be provided through various signaling methods. According to an embodiment, the information related to the feeder link recovery may be provided via a system information block (SIB). For example, the information related to the feeder link recovery may be provided through SIB 31 or SIB 32. Hereinafter, SIB 32 is described as an example in this disclosure, but it is not excluded that the information described below may be transmitted by SIB 31 or other SIBs. The SIB 32 may include satellite assistance information for predicting discontinuous coverage.

The SIB 32 may be signaled on an NTN cell provided by the satellite 520. The information related to the feeder link recovery may be cell-specific.

As an example, the SIB 32 may be referred to in the following table.

【Table 1】

| |
|---|
| *−SystemInformationBlockType32* |

The IE *SystemInformationBlockType32* contains satellite assistance information for prediction of discontinuous coverage. *SystemInformationBlockType32* is only signalled in a NTN cell.

**SystemInformationBlockType32 information element**

```
-- ASN1START

SystemInformationBlockType32-r17 ::= SEQUENCE {

    satelliteInfoList-r17            SatelliteInfoList-r17    OPTIONAL,    -- Need OR

    lateNonCriticalExtension         OCTET STRING                         OPTIONAL,

    ...,

    [[   satelliteInfoList-v1800     SatelliteInfoList-v1800 OPTIONAL     -- Need OR

    ]],

    [[   satelliteInfoList-v1830     SatelliteInfoList-v1830 OPTIONAL     -- Need OR

    ]]

}

SatelliteInfoList-r17 ::=      SEQUENCE (SIZE (1..maxSat-r17)) OF SatelliteInfo-r17

SatelliteInfoList-v1800 ::=    SEQUENCE (SIZE (1..maxSat-r17)) OF CarrierFreqList-v1800

SatelliteInfoList-v1830 ::=    SEQUENCE (SIZE (1..maxSat-r17)) OF CarrierFreqList-v1830

SatelliteInfo-r17 ::=              SEQUENCE {

    satelliteId-r17               INTEGER (0..255),

    serviceInfo-r17               SEQUENCE {

        tle-EphemerisParameters-r17 TLE-EphemerisParameters-r17    OPTIONAL,    -- Need OR

        t-ServiceStart-r17            TimeOffsetUTC-r17                OPTIONAL    -- Need OR

    },
```

```
            footprintInfo-r17              SEQUENCE {

                referencePoint-r17              SEQUENCE {

                    longitude-r17                       INTEGER (-131072..131071),

                    latitude-r17                    INTEGER (-131072..131071)

                } OPTIONAL,    -- Need OR

                elevationAngles-r17         SEQUENCE {

                    elevationAngleRight-r17     INTEGER (-14..14),

                    elevationAngleLeft-r17 INTEGER (-14..14)                    OPTIONAL       -- Need OP

                } OPTIONAL,    -- Need OR

                radius-r17                      INTEGER (1..256)                         OPTIONAL      -- Need
OR

                feederlinkinfo-r19                          feederlinkinfo-r19

            }

        }



    CarrierFreqList-v1800 ::=         SEQUENCE (SIZE (1..maxFreq)) OF ARFCN-ValueEUTRA

    CarrierFreqList-v1830 ::=         SEQUENCE {

        carrierFreqList-r18                     SEQUENCE (SIZE (1..maxFreq)) OF ARFCN-ValueEUTRA-r9

    }

    -- ASN1STOP
```

'carrierFreqList' indicates a list of E-UTRA frequencies. 'elevationAngleLeft' and 'elevationAngleRight' indicate an elevation angle of the left and the right (with reference to a satellite direction), respectively, and a unit is a degree. The actual value may be a value of a corresponding field multiplied by 5. 'footprintInfo' indicates a footprint of the satellite. The satellite 520 (e.g., E-UTRAN) may configure elevationAngles and/or a radius for an earth moving cell. The satellite 520 (e.g., E-UTRAN) may configure a reference Point and a radius for a quasi-earth fixed cell. 'latitude' indicates a latitude of the reference point (in units of degrees). 'longitude' indicates a longitude of the reference point (in units of degrees). 'satelliteInfoList' indicates a list of satellite information. 'serviceInfo' indicates coverage information provided by the satellite. 'tle-EphemerisParameters' indicates an average value of satellite orbit parameters based on a TLE set format for estimating periods inside and outside coverage of a satellite (e.g., the satellite 520) including the earth moving cell. 't-ServiceStart' indicates time information of a timing when a reception satellite for the quasi-earth fixed cell will start a service in a corresponding region. 'feederlinkinfo' indicates information related to the feeder link recovery according to embodiments of the present disclosure. In addition to the above description, for each IE, a specification of TS 36.331 v18.3.1 may be referred to.

According to another embodiment, the information related to the feeder link recovery may be provided through an RRC message (e.g., an RRC connection reconfiguration message) different from system information. For example, the information related to the feeder link recovery may be UE-specific. According to another embodiment, the information related to the feeder link recovery may be provided through a medium access control (MAC) control element (CE). According to another embodiment, the information related to the feeder link recovery may be provided through downlink control information (DCI).

2. Parameters

The information related to the feeder link recovery may include one or more parameters. The information related to the feeder link recovery may be used to provide UE (e.g., the UE 510) that receives the information with information on recovery of a satellite (e.g., the satellite 520) providing an NTN cell. Accordingly, the information related to the feeder link recovery may include information indicating a recovery timing of the satellite 520, and/or information required to predict the recovery timing.

According to an embodiment, the information related to the feeder link recovery may include information on a timer. For example, the information on the timer may indicate a length of the timer and/or a start timing of the timer. The UE 510 may start the timer. For example, the UE 510 may start the timer in response to receiving the information on the timer. For another example, the UE 510 may start the timer at a start timing indicated by the information on the timer. If the timer is running, the UE 510 may identify that the feeder link of the satellite 520 is in a recoverable state. Expiration of the timer may indicate recovery of the feeder link of the satellite 520. While the timer is running, the UE 510 may expect that the feeder link of the satellite 520 is in the unavailable state but will be recovered with the expiration of the timer. If the UE 510 receives an indicator indicating that the feeder link of the satellite 520 is in an available state or an indicator indicating that the feeder link of the satellite 520 will not be recovered, the UE 510 may not operate the timer anymore. For example, the UE 510 may operate the timer received from the satellite 520. Thereafter, the UE 510 may start the timer. As the satellite 520 is positioned adjacent to a ground segment (e.g., an NTN gateway 530), the feeder link may be in the available state. Meanwhile, the service link between the UE 510 and the satellite 520 may be in the unavailable state. As the timer expires, the UE 510 may identify that the feeder link of the satellite 520 is in the available state. Thereafter, the satellite 520 may move again along its orbit. The feeder link may be in the unavailable state. Thereafter, the satellite 520 may be reconnected to the UE 510 through signaling. When the UE 510 is accessed to the satellite 520, the UE 510 may restart the timer. Thereafter, while the timer is running, the UE 510 may determine that the feeder link is in a non-operable state. Meanwhile, while the UE 510 is accessed to the satellite 520, the satellite 520 may provide the UE 510 with information on a changed state of the feeder link. For example, in a case that the satellite 520 needs to change a value of the timer or it is difficult to continue operating the timer, (e.g., in a case that recovery of the feeder link is not expected in a short period), the satellite 520 may provide the UE 510 with a separate indicator. Upon receiving this, the UE 510 may stop the timer or release the configured timer.

According to an embodiment, the information related to the feeder link recovery may include information on history. The information related to the feeder link recovery may provide information on a history in which the satellite 520 was connected to the ground segment, (e.g., the NTN gateway 530), among the orbits in which the satellite 520 moves. For example, the information related to the feeder link recovery may include information on a packet data unit (PDU) session or an evolved packet system (EPS) bearer related to a cell of the satellite 520. The UE 510 may determine recoverability through the PDU session or the EPS bearer related to the cell provided by the satellite 520. For example, in a case that a type of a service indicated by the PDU session or the EPS bearer is a delay-tolerant service, the UE 510 may identify that the feeder link of the satellite 520 is recovered within a predetermined time. As an example, the UE 510 may check a QoS Class Identifier (QCI), and in a case that the QCI is a predetermined value, (e.g., a value indicating the delay-tolerant service or a service of a guaranteed bit rate (GBR) below a threshold value), the UE 510 may identify that the feeder link of the satellite 520 is recovered within the predetermined time. The UE 510 may obtain time information associated with an ID of the feeder link. The UE 510 may predict a recovery timing of the feeder link of the satellite 520. For example, the information related to the feeder link recovery may include information on an ID of a feeder link through which the cell of the satellite 520 was connected to a core network, (e.g., the core network 550). The UE 510 may obtain the time information associated with the ID of the feeder link. The UE 510 may predict the recovery timing of the feeder link of the satellite 520. For example, the information related to the feeder link recovery may include a satellite ID or an ID of the core network entity disposed on the ground. As an example, the ID of the core network entity may include an MME ID. The UE 510 may predict the recovery timing of the feeder link of the satellite 520 based on a geographic area in which the MME ID is positioned and/or cell information on the satellite 520, (e.g., ephemeris information, or orbit information).

According to an embodiment, the information related to the feeder link recovery may include information on a space. For example, the information related to the feeder link recovery may include, as history information for the satellite 520, a tracking area, a location area, footprint information, service information, and/or ephemeris information.

In operation 703, the satellite 520 may transmit one or more parameters for the S&F mode to the UE 510. According to an embodiment, the UE 510 may perform a paging procedure according to the S&F mode in the RRC idle state. A description regarding the paging procedure and parameters related to the paging procedure will be described in detail with reference to FIG. 8A. According to an embodiment, the UE 510 may perform a DRX operation according to the S&F mode. A description regarding the DRX operation and parameters related to the DRX operation will be described in detail with reference to FIG. 8B. In the present disclosure, the parameters for the UE 510 in the RRC idle state in the S&F mode are illustrated as being provided via separate signaling from the information related to the feeder link recovery, but embodiments of the present disclosure are not limited thereto. For example, the parameters in the operation 703 may be transmitted together with the information related to the feeder link recovery in the operation 701. As an example, the satellite 520 may transmit, to the UE 510, the information related to the feeder link recovery and the parameters (e.g., the parameters related to the paging procedure and the parameters related to the DRX operation) for the UE in the RRC idle state, through one message (e.g., the system information such as the SIB 32, or the RRC message such as the RRC reconfiguration message).

In operation 705, the UE 510 may predict the recovery timing. In other words, the UE 510 may determine the expected recovery timing. According to an embodiment, the UE 510 may determine the recovery timing of the feeder link of the satellite 520 based on the information related to the feeder link recovery from the satellite 520. According to an embodiment, the UE 510 may determine the recovery timing of the feeder link of the satellite 520 based on the information related to the feeder link recovery from the satellite 520 and the parameters related to the DRX operation. For example, the UE 510 may determine that the feeder link of the satellite 520 is recovered after a specified time following a DRX on-duration for the cell of the satellite 520. The specified time may be indicated by the satellite 520 or calculated in a predefined manner through DRX parameters (e.g., determined as an area after 50% of a long DRX cycle). According to an embodiment, the UE 510 may determine the recovery timing of the feeder link of the satellite 520 based on the information related to the feeder link recovery from the satellite 520 and the parameters related to the paging procedure. For example, the UE 510 may determine that the feeder link of the satellite 520 is recovered after a specified time from a paging frame after receiving the paging frame for the cell of the satellite 520. The specified time may be indicated by the satellite 520 or calculated in a predefined manner through a paging parameter (e.g., an area of 40% to 60% of the paging cycle).

The UE 510 may perform a pre-operation in the operation 707. The pre-operation refers to an operation that the UE 510 performs in advance while expecting recovery of the feeder link. The UE 510 may be in the RRC idle state.

The UE 510 may perform the pre-operation when the recovery timing is predicted through the operation 705. According to an embodiment, the UE 510 may additionally perform paging monitoring when an end timing of the service link is within a first threshold interval from a current timing and the recovery timing of the feeder link is within a second threshold interval from the current timing. By performing the paging monitoring, the UE 510 may increase a paging opportunity before the service link ends to attempt connection as much as possible. As a non-limiting example, even in a case that the end timing of the service link is within the first threshold interval from the current timing or the recovery timing of the feeder link is within the second threshold interval from the current timing, the UE 510 may perform additional paging monitoring. According to an embodiment, the UE 510 may set a paging monitoring cycle to be short in a case that the end timing of the service link is within the first threshold interval from the current timing and the recovery timing of the feeder link is within the second threshold interval from the current timing. As the paging monitoring cycle becomes shorter, the number of paging monitoring per unit time may increase. As a non-limiting example, even in a case that the end timing of the service link is within the first threshold interval from the current timing or the recovery timing of the feeder link is within the second threshold interval from the current timing, the UE 510 may set the paging monitoring cycle shorter than a basic cycle.

According to an embodiment, the first threshold interval and/or the second threshold interval may be indicated (e.g., the RRC message, the MAC CE, or the DCI) by a network (e.g., the satellite 520), or may be determined based on ephemeris information of the satellite 520, or may be determined as a fixed value.

The UE 510 may perform monitoring for a paging message from the satellite 520 while in the RRC idle state. Parameters related to the paging message and/or parameters related to the monitoring may be configured to the UE 510 by the satellite 520. Since the UE 510 expects the feeder link of the satellite 520 to be recovered, the UE 510 may attempt cell access to perform a service (e.g., the delay-tolerant service, or the SMS service) possible through the feeder link of the satellite 520. The UE 510 may perform a random access procedure with the satellite 520 in response to receiving the paging message. After the random access procedure, the UE 510 may operate in an RRC_connected state. The UE 510 may transmit or receive data with the satellite 520. For example, the UE 510 may provide the satellite 520 with uplink data (e.g., PUSCH). The satellite 520 may store the uplink data. Thereafter, if the feeder link is recovered, the uplink data may be transmitted to another device (e.g., a server, or a smartphone) through the feeder link and the core network entity.

According to an embodiment, the UE 510 may set an additional on-duration in a case that the end timing of the service link is within the first time interval from the current timing and the recovery timing of the feeder link is within the second time interval from the current timing. Through the additional on-duration, the UE 510 may transmit more data to the satellite 520. Information on the additional on-duration may be provided from the satellite 520 as a timer or a length of a cycle. As an example, the information on the additional on-duration may be received from the SIB or the RRC message of the satellite 520. As an example, the information on the additional on-duration may be included in the information on the feeder link recovery of the operation 701 and/or the one or more parameters for the S&F mode of the operation 703. For example, the UE 510 may perform a DRX procedure with the satellite 520. Parameters related to the DRX procedure may be configured to the UE 510 by the satellite 520. The UE 510 may perform a DRX operation after accessing the satellite. The DRX, which is discontinuous reception, indicates that an on-duration and an off-duration are repeatedly performed for power saving of the UE 510. Since it is advantageous for the UE 510 to transmit data considering the recovery timing of the feeder link, the UE 510 may determine whether to skip data transmission/reception in the DRX on-duration based on the recovery timing of the feeder link. As a non-limiting example, even in a case that the end timing of the service link is within the first time interval from the current timing or the recovery timing of the feeder link is within the second time interval from the current timing, the UE 510 may perform communication with the network through the additionally set on-duration.

According to an embodiment, the UE 510 may increase an access priority to the NTN cell when the recovery timing of the feeder link is expected. As an example, the UE 510 may increase priority information for a cell (e.g., 'CellReselectionPriority', see TS 36.304, or TS 36.331) or lower a cell reselection threshold value (e.g., 'Reselection-Threshold IE'). According to an embodiment, the UE 510 may perform a conditional handover in a case that the recovery timing of the feeder link is expected and the recovery of the feeder link is expected within a specified time. For example, a handover execution condition may be set based on parameters related to the recovery timing of the feeder link. As a non-limiting example, the UE 510 may select one of one or more cells indicated in 'whitelist Cell List' IE and perform a handover (e.g., the conditional handover) to the selected cell.

FIG. 8A illustrates an example 800 of a paging procedure in an S&F mode. A satellite 520 may be configured to perform functions of an eNB. As an example, the eNB may be disposed on a board of the satellite 520, and entities of a core network (e.g., the core network 550) may be disposed on the ground. As an example, a portion of the eNB and the entities of the core network (or a portion of a particular entity (e.g., a mobile management entity (MME))) may be disposed on the board of the satellite 520, and other entities of the core network may be disposed on the ground. The same reference numbers may indicate the application of the same description.

Referring to FIG. 8A, UE 510 may use discontinuous reception (DRX) for power saving in an RRC idle state. One paging occasion (PO) indicates a subframe in which P-RNTI may be transmitted through a physical downlink control channel (PDCCH) that processes a paging message. A paging frame (PF) indicates one radio frame, and may include one or more paging occasions. When using the DRX, the UE 510 may monitor only one paging occasion per a DRX cycle (e.g., a DRX cycle 810). For example, radio frames (e.g., a frame 821) within the DRX cycle 810 may be paging frames. For example, a paging frame for the UE 510 may be a frame 822. The frame 822 for the UE 510, which is the paging frame, may include a plurality of paging occasions (e.g., a paging occasion 831), and the paging occasion for the UE 510 may be a paging occasion 832. According to a 3GPP standard, the paging frame may be determined based on the following equation.

【Equation 1】

$$\text{SFN mod } T = (T \text{ div } N) * (UE\_ID \text{ mod } N)$$

Herein, T indicates the DRX cycle (e.g., the DRX cycle 810), N indicates a smaller value between T and nB (that is, min(T, nB)), and nB may be configured by RRC. UE_ID indicates a result (UE_ID: IMSI mod 1024) of a modulo-1024 operation of an International Mobile Subscriber Identity (IMSI) value.

According to the 3GPP standard, a pattern of the paging occasion within the subframe may be determined based on the following equation.

【Equation 2】

$$i\_s = floor(UE\_ID/N) \bmod Ns$$

Herein, Ns indicates max(1, nB/T).

According to various embodiments of the present disclosure, the UE 510 may receive one or more parameters for the paging procedure from the satellite 520. According to an embodiment, the one or more parameters for the paging procedure may include information on a paging cycle for the S&F mode. The paging cycle may be used to separately specify a DRX cycle of the UE 510 operating in the S&F mode. As an example, the paging cycle may be referred to as a 'T' value of Equation 1. Through a shortened cycle, the UE 510 may perform paging monitoring. As a non-limiting example, additional paging for the S&F mode may be performed preliminarily in addition to the existing paging procedure. As an example, when operating in the S&F mode, in a case that unavailability of a service link is expected (e.g., before a specified time from a timing when the service link becomes an unavailable state), the UE 510 may perform a procedure for the additional paging. Information on the specified time may be configured by a network or may be a fixed value. As an example, when operating in the S&F mode, in a case that recovery of the service link is expected (e.g., before the specified time from a timing when the service link becomes an available state), the UE 510 may perform the procedure for the additional paging. Information on the specified time may be configured by the network or may be a fixed value. The paging cycle may indicate a DRX cycle including a timing of the expected unavailability or recovery.

According to an embodiment, the one or more parameters for the paging procedure may include information on a paging occasion for the S&F mode. For example, the information on the paging occasion may include an 'nB' value. For another example, the information on the paging occasion may include a parameter (e.g., an offset or an occasion number) for indicating a paging occasion for performing additional paging. As a non-limiting example, the additional paging for the S&F mode may be performed preliminarily in addition to the existing paging procedure. As an example, when operating in the S&F mode, in a case that the unavailability of the service link is expected (e.g., before the specified time from the timing when the service link becomes the unavailable state), the UE 510 may perform a procedure for the additional paging. As an example, when operating in the S&F mode, in a case that recovery of the service link is expected (e.g., before the specified time from the timing when the service link becomes the available state), the UE 510 may perform the procedure for the additional paging. The UE 510 may perform paging monitoring at the paging occasion indicated by the information on the paging occasion.

According to an embodiment, the one or more parameters for the paging procedure may include information on an identifier. The identifier may be used to identify a paging message of the satellite 520 that provides a cell supporting the S&F mode. For example, the information on the identifier may include P-RNTI for the S&F mode. For example, the information on the identifier may include an identifier for the S&F mode, which is different from the P-RNTI. As a non-limiting example, additional paging for the S&F mode may be performed preliminarily in addition to the existing paging procedure. As an example, when operating in the S&F mode, in a case that the unavailable state of the service link is expected (e.g., before the specified time from the timing when the service link becomes the unavailable state), the UE 510 may perform an access attempt through PDCCH masked with the identifier. For another example, when operating in the S&F mode, in a case that recovery of the service link is expected (e.g., before the specified time from the timing when the service link becomes the available state), the UE 510 may perform the access attempt through the PDCCH masked with the identifier.

According to an embodiment, the one or more parameters for the paging procedure may include information on the number of paging monitoring. As the satellite 520 moves, the service link between the UE 510 and the satellite 520 in the S&F mode may become invalid. In an invalid state, the number of paging monitoring (e.g., the number of paging occasions) may be set so that the UE 510 does not unnecessarily monitor the paging message of the satellite 520. After the UE 510 monitored by the number of the paging monitoring for the S&F mode, it may remain in the RRC IDLE state for a predefined time (e.g., an orbital period of the satellite 520 minus an offset time). The offset time may indicate a time when the satellite 520 is connected to the UE 510 in the S&F mode. The predefined time may be determined by the UE 510 or configured by the network (e.g., the satellite 520). The offset time may be determined by the UE 510 or configured by the network (e.g., the satellite 520). Thereafter, after the predefined time, since the recovery of the service link is expected, the UE 510 may perform paging monitoring again.

According to an embodiment, the one or more parameters for the paging procedure may include information on the number of pre-paging monitoring. In the S&F mode, the service link between the UE 510 and the satellite 520 may repeat recovery and unavailability. From a certain timing prior to the recovery of the service link, the UE 510 may perform additional paging monitoring. The UE 510 may additionally perform a pre-paging procedure so as not to delay a resumption time of the communication between the UE 510 and the satellite 520 due to the paging cycle. The pre-paging procedure may be performed for each paging cycle and may indicate the number of paging occasions to be additionally performed in addition to paging occasions according to predefined parameters within the corresponding paging cycle.

FIG. 8B illustrates an example 840 of a discontinuous reception (DRX) operation in an S&F mode.

Referring to FIG. 8B, UE 510 may use discontinuous reception (DRX) for power saving in an RRC idle state. The UE 510 may periodically switch an active state and an inactive state to reduce battery consumption. In the active state (i.e., on-duration), the UE 510 receives or transmits data from a network (e.g., a satellite 520), and in the inactive state, power is saved by minimizing latency. For example, in the active state, the UE 510 may turn on an RF unit, and in the inactive state, the UE 510 may turn off the RF unit. The UE 510 may transmit or receive a data packet in an active state 851 of an RRC_connected state. The UE 510 may restart an inactivity timer each time the data packet is transmitted or received. When the inactivity timer expires, the UE 510 may enter an DRX mode 852 in the RRC_connected state. The UE 510 may perform communication by being activated for each short DRX cycle period. A duration in which the UE 510 transmits or receives a signal may be referred to as an on-duration. When a DRX short cycle timer expires, a DRX repetition period (a changing period of the active state and the inactive state) of the UE 510 may be changed from a short DRX cycle to a long DRX cycle. In the active state according to the DRX cycle, if the UE 510 receives data (e.g., decoding PDCCH), the UE 510 may terminate the DRX mode and operate in an active state 853 again. If a period in which there is no transmission or reception of data continues in the DRX mode or the active state 853 in the RRC_connected state, the UE 510 may enter an RRC idle state 854. Even in the RRC idle state 854, the UE 510 may perform the DRX operation. The DRX operation in the RRC idle state 854 may be referred to as the paging monitoring procedure illustrated in FIG. 8A.

According to various embodiments of the present disclosure, the UE 510 may receive one or more parameters for DRX from the satellite 520. According to an embodiment, the one or more parameters for the DRX may include information on an on-duration for the S&F mode. For example, the information on the on-duration may indicate a time interval corresponding to the active state in the DRX cycle. The information on the on-duration may include a value corresponding to the number of subframe(s). As an example, if the recovery of the service link is expected, since it is advantageous to increase a time of the active state, the information on the on-duration for the S&F mode may be set to a value longer than an on-duration of a general (that is, configured for communication between a terrestrial base station and UE) DRX. As another example, after the service link is terminated, since operating in the active state is unnecessary, the information on the on-duration for the S&F mode may be set to a value longer than the on-duration of the general (that is, configured for communication between the terrestrial base station and the UE) DRX. The parameter is an on-duration separately set for the S&F mode, and if a termination time of the service link is imminent (e.g., within a first threshold duratrion) or if a recovery time of the service link is imminent, a sufficient active state may be secured through the corresponding on-duration. A valid active time in which the UE 510 may communicate with the satellite 520 in the S&F mode may be improved. As a non-limiting example, instead of being separately set from the on-duration of the general DRX, a time for additionally maintaining the active state, in addition to the on-duration of the general DRX, may be configured to the UE 510 as a parameter for the DRX.

According to an embodiment, the one or more parameters for the DRX may include information on a DRX inactivity timer for the S&F mode. In terms of the UE 510 operating in the S&F mode, it may be advantageous to increase data transmission efficiency by maintaining the active state as much as possible until the service link is terminated. Also, in terms of the UE 510, maintaining the active state before the service link is recovered may be advantageous in terms of the transmission efficiency. This is because if the service link is in the unavailable state, the UE 510 does not need to use the RF unit anyway. The information on the DRX inactivity timer for the S&F mode may be set to a value longer than a DRX inactivity timer of the general (that is, configured for communication between the terrestrial base station and the UE) DRX. The parameter is a timer separately set for the S&F mode, and if the termination time of the service link is imminent (e.g., within the first threshold duration), the active state of the UE 510 may be sufficiently secured by delaying a time entering the DRX mode as much as possible. As a non-limiting example, instead of the general DRX inactivity timer being separately set, an offset for additionally maintaining the active state, in addition to the general DRX inactivity timer, may be configured to the UE 510 as a parameter for the DRX.

According to an embodiment, the one or more parameters for the DRX may include information on a DRX cycle length for the S&F mode. As the DRX cycle length becomes long, the UE 510 is advantageous in terms of battery saving. On the other hand, as the DRX cycle length becomes short, the UE 510 enters the active state at short intervals, and thus, it may be advantageous in terms of the transmission efficiency. As an example, in terms of the UE 510 operating in the S&F mode, if the recovery of the service link is expected, it may be advantageous to increase a frequency of the active state so as to increase the data transmission efficiency. As an example, in terms of the UE 510, maintaining the active state before the service link is recovered may be advantageous in terms of the transmission efficiency. The information on the DRX cycle length for the S&F mode may be set to a value shorter than a general DRX (that is, configured for communication between the terrestrial base station and the UE) cycle length. As a non-limiting example, instead of the general DRX cycle length being separately set, a separate offset, in addition to the general DRX cycle length, may be configured to the UE 510 as a parameter for the DRX.

According to an embodiment, the one or more parameters for the DRX may include information on a DRX short cycle timer for the S&F mode. In terms of the UE 510 operating in the S&F mode, it may be advantageous to increase the data transmission efficiency by maintaining the active state as much as possible until the service link is terminated. This is because if the service link is in the unavailable state, the UE 510 does not need to use the RF unit anyway. However, the DRX short cycle timer is used to enter the DRX long cycle, and when the service link is not available, it is advantageous for the UE 510 to enter the DRX long cycle in terms of the transmission efficiency. The information on the DRX short cycle timer for the S&F mode may be set to a value longer than a general DRX (that is, configured for communication between the terrestrial base station and the UE) short cycle timer. The parameter is a timer separately set for the S&F mode, and if the termination time of the service link is imminent (e.g., within the first threshold duration), the active state of the UE 510 may be sufficiently secured by delaying a time entering the DRX long cycle as much as possible. As a non-limiting example, instead of the general DRX short cycle timer being separately set, an offset for additionally maintaining the active state, in addition to the general DRX short cycle timer, may be configured to the UE 510 as a parameter for the DRX.

According to an embodiment, the one or more parameters for DRX may include information indicating whether the DRX is supported in the S&F mode. For example, whether DRX is supported for the S&F mode may be configured for the UE 510 as separate information. Information on the DRX for the S&F mode may be included within DRX configuration information. In a case of indicating that information on the DRX for the S&F mode is enabled, parameters for the S&F mode may be configured to the UE 510 separately from general DRX (that is, configured for communication between the terrestrial base station and the UE) parameters. In a case of indicating that information on the DRX for the S&F mode is disabled, the UE 510 may reuse the general DRX parameters for the S&F mode.

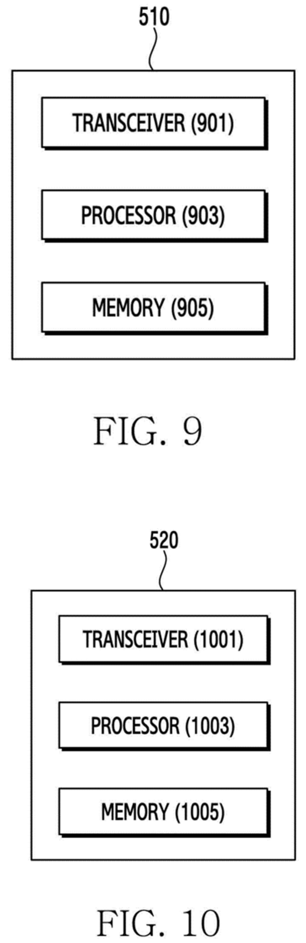

FIG. 9 illustrates an example of components of UE (e.g., UE 510).

Referring to FIG. 9, the UE 510 may include a transceiver 901, a processor 903, and memory 905. The transceiver 901 performs functions for transmitting and receiving signals through a wireless channel. For example, the transceiver 901 up-converts a baseband signal into an RF band signal and then transmits it through an antenna, and down-converts the RF band signal received through the antenna into a baseband signal. For example, the transceiver 901 may include a transmission filter, a reception filter, an amplifier, a mixer, an oscillator, a digital to analog converter (DAC), an analog to digital converter (ADC), and the like.

The transceiver 901 may include a plurality of transmission/reception paths. Furthermore, the transceiver 901 may include an antenna unit. The transceiver 901 may include at least one antenna array configured with a plurality of antenna elements. In terms of hardware, the transceiver 901 may be configured with digital circuitry and analog circuitry (e.g., a radio frequency integrated circuit (RFIC)). Herein, the digital circuitry and the analog circuitry may be implemented as one package. Also, the transceiver 901 may include a plurality of RF chains. The transceiver 901 may perform beamforming. The transceiver 901 may apply a beamforming weight to a signal to be transmitted/received in order to give a directivity according to a setting of the processor 903. According to an embodiment, the transceiver 901 may include a radio frequency (RF) block (or an RF unit). According to an embodiment, the transceiver 901 may support satellite communication. The UE 510 may transmit a signal to a satellite (e.g., a satellite 520) through the transceiver 901 or receive a signal from the satellite (e.g., the satellite 520).

The transceiver 901 may transmit and receive a signal on a radio access network. For example, the transceiver 901 may receive a downlink signal. The downlink signal may include a synchronization signal (SS), a reference signal (RS) (e.g., a cell-specific reference signal (CRS), or a demodulation (DM)-RS), system information (e.g., MIB, SIB, remaining system information (RMSI), or other system information (OSI)), a configuration message, control information, or downlink data. Also, for example, the transceiver 901 may transmit an uplink signal. The uplink signal may include a random access-related signal (e.g., a random access preamble (RAP) (or a message 1 (Msg1), a message 3 (Msg3)), a reference signal (e.g., a sounding reference signal (SRS), DM-RS), uplink control information (UCI), (e.g., channel state information (CSI)), a hybrid automatic repeat request (HARQ), a scheduling request (SR), or a power headroom report (PHR). Only the transceiver 901 is illustrated in FIG. 9, but according to another implementation, the UE 510 may include two or more RF transceivers.

The processor 903 controls overall operations of the UE 510. The processor 903 may be referred to as a control unit. For example, the processor 903 transmits and receives a signal through the transceiver 901. Furthermore, the processor 903 writes and reads data to and from the memory 905. In addition, processor 903 may perform functions of a protocol stack required by a communication standard. Only the processor 903 is illustrated in FIG. 9, but according to another implementation, the UE 510 may include two or more processors. The processor 903 is a set of instructions or code stored in the memory 905, which is at least temporarily resided in the processor 903, or a storage area storing the instructions/code, or a portion of circuitry configuring the processor 903. In addition, processor 903 may include various modules for performing communication. The processor 903 may control the UE 510 to perform operations according to embodiments.

The memory 905 stores data such as a basic program, an application program, and setting information for an operation of the UE 510. The memory 905 may be referred to as a storage unit. The memory 905 may be configured with a volatile memory, a non-volatile memory, or a combination of a volatile memory and a non-volatile memory. In addition, the memory 905 provides data stored according to a request of the processor 903. According to an embodiment, the memory 905 may include memory for a condition, a command, or a setting value related to a satellite communication transmission method.

FIG. 10 illustrates an example of components of a satellite (e.g., a satellite 520).

Referring to FIG. 10, the satellite 520 may include at least one transceiver 1001, at least one processor 1003, and at least one memory 1005. Hereinafter, a component is described in a singular, but implementation of a plurality of components or sub-components is not excluded.

The transceiver 1001 performs functions for transmitting and receiving a signal through a wireless channel. For example, the transceiver 1001 performs a conversion function between a baseband signal and a bit stream according to a physical layer specification of a system. For example, when transmitting data, the transceiver 1001 generates complex symbols by encoding and modulating a transmission bit stream. In addition, when receiving data, the transceiver 1001 restores the received bit stream by demodulating and decoding the baseband signal. In addition, the transceiver 1001 up-converts the baseband signal into a radio frequency (RF) band signal and then transmits it through an antenna, and down-converts the RF band signal received through the antenna into a baseband signal. To this end, the transceiver 1001 may include a transmission filter, a reception filter, an amplifier, a mixer, an oscillator, a digital to analog converter (DAC), an analog to digital converter (ADC), and the like. Also, the transceiver 1001 may include a plurality of transmission/reception paths. Furthermore, the transceiver 1001 may include at least one antenna array configured with a plurality of antenna elements. In terms of hardware, the transceiver 1001 may be configured with a digital unit and an analog unit, and the analog unit may be configured with a plurality of sub-units according to an operating power, an operating frequency, and the like. The transceiver 1001 transmits and receives a signal as described above. Accordingly, the transceiver 1001 may be referred to as a 'transmission unit', a 'reception unit', or a 'transmission/reception unit'.

The transceiver 1001 does not exclude a probability of transmitting or receiving a signal not only through the wireless channel but also via a backhaul network, optical communication, the Ethernet, or other wired paths. For example, the transceiver 1001 may support optical communication for signaling of the satellite 520 with another satellite. The satellite 520 may perform optical communication with the other satellite by using a laser beam through the transceiver 1001. For example, wired communication between components in the satellite 520 may be supported. The transceiver 1001 may convert a bit stream transmitted from the satellite 520 to another node, for example, another access node, another base station, an upper node, a core network, and the like, into a physical signal, and convert the physical signal received from the other node into a bit stream.

The transceiver 1001 may support communication between the satellite 520 and the UE 510. The transceiver 1001 may support communication between the satellite 520 and the UE 510 as well as communication between the satellite 520 and a ground segment (e.g., a network entity of an NTN gateway 530, or a core network 550). As a non-limiting example, circuitry for communication with the UE 510 in the transceiver 1001 and circuitry for communication with the ground segment (e.g., the network entity of the NTN gateway 530, or the core network 550) may be distinguished.

The processor 1003 may control overall operations of the satellite 520. For example, the processor 1003 writes and reads data to and from the memory 1005. For example, the processor 1003 transmits and receives a signal through the transceiver 1001. Although FIG. 10 illustrates one processor, embodiments of the present disclosure are not limited thereto. The satellite 520 may include at least one processor (e.g., including a plurality of processors) to perform embodiments of the present disclosure. The processor 1003 may be referred to as a control unit or a control means. According to embodiments of the present disclosure, the processor 1003 may control the satellite 520 to perform at least one of operations or methods according to embodiments of the present disclosure.

The memory 1005 may store data such as a basic program, an application program, and setting information for an operation of the satellite 520. The memory 1005 may store various data used by at least one component (e.g., the transceiver 1001 or the processor 1003). The data may include, for example, input data or output data for software and related instructions. The memory 1005 may be configured with a volatile memory, a non-volatile memory, or a combination of a volatile memory and a non-volatile memory. And the memory 1005 may provide stored data in response to a request from the processor 1003.

In embodiments of the present disclosure, a device of a satellite for providing a non-terrestrial network (NTN) access is provided. The device may comprise memory comprising instructions, at least one processor, and at least one transceiver. The instructions, when executed by the at least one processor, may cause the device to transmit, to a user equipment (UE), a message including information related to a store and forward (S&F) mode, and perform communication with the UE based on the message. The message may include at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

For example, the message may include at least one of information on a paging cycle for the S&F mode, information on a paging frame for the S&F mode, information on a paging occasion for the S&F mode, information on a number of paging monitoring for the S&F mode, or information on a paging radio network temporary identifier (P-RNTI) for the S&F mode.

For example, the message may include at least one of information on a discontinuous reception (DRX) on-duration for the S&F mode, information on a DRX retransmission timer for the S&F mode, information on a DRX inactivity timer for the S&F mode, information on a DRX cycle length for the S&F mode, information on a DRX short cycle timer for the S&F mode, or information indicating whether DRX is supported in the S&F mode.

For example, the message may include at least one of packet data unit (PDU) session information for the S&F mode, evolved packet system (EPS) information, data radio bearer (DRB) information, an ID of a feeder link between the satellite and the NTN gateway, an ID of the satellite, cell selection parameters for the S&F mode, or information on an event trigger condition for the S&F mode.

For example, the message may include information on a first successor satellite to provide a service to a first footprint of the satellite and information on a second successor satellite to provide a service to a second footprint of a target satellite.

In embodiments of the present disclosure, a user equipment (UE) for performing a non-terrestrial network (NTN) access is provided. The UE may comprise memory comprising instructions, at least one processor, and at least one transceiver. The instructions, when executed by the at least one processor, may cause the UE to receive, from a satellite configured to perform functions of an evolved node B (eNB), a message including information related to a store and forward (S&F) mode, and perform communication with the satellite based on the message. The message may include at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

For example, the message may include at least one of information on a paging cycle for the S&F mode, information on a paging frame for the S&F mode, information on a paging occasion for the S&F mode, information on a number of paging monitoring for the S&F mode, or information on a paging radio network temporary identifier (P-RNTI) for the S&F mode.

For example, the message may include at least one of information on a discontinuous reception (DRX) on-duration for the S&F mode, information on a DRX retransmission timer for the S&F mode, information on a DRX inactivity timer for the S&F mode, information on a DRX cycle length for the S&F mode, information on a DRX short cycle timer for the S&F mode, or information indicating whether DRX is supported in the S&F mode.

For example, the message may include at least one of packet data unit (PDU) session information for the S&F mode, evolved packet system (EPS) information, data radio bearer (DRB) information, an ID of the feeder link between the satellite and the NTN gateway, an ID of the satellite, cell selection parameters for the S&F mode, or information on an event trigger condition for the S&F mode.

For example, the message may include information on a first successor satellite to provide a service to a first footprint of the satellite, and information on a second successor satellite to provide a service to a second footprint of a target satellite.

In embodiments of the present disclosure, a method performed by a satellite for providing a non-terrestrial network (NTN) access is provided. The method may comprise transmitting, to a user equipment (UE), a message including information related to a store and forward (S&F) mode, and performing communication with the UE based on the message. The message may include at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

For example, the message may include at least one of information on a paging cycle for the S&F mode, information on a paging frame for the S&F mode, information on a paging occasion for the S&F mode, information on a number of paging monitoring for the S&F mode, or information on a paging radio network temporary identifier (P-RNTI) for the S&F mode.

For example, the message may include at least one of information on a discontinuous reception (DRX) on-duration for the S&F mode, information on a DRX retransmission timer for the S&F mode, information on a DRX inactivity timer for the S&F mode, information on a DRX cycle length for the S&F mode, information on a DRX short cycle timer for the S&F mode, or information indicating whether DRX is supported in the S&F mode.

For example, the message may include at least one of packet data unit (PDU) session information for the S&F mode, evolved packet system (EPS) information, data radio bearer (DRB) information, an ID of the feeder link between the satellite and the NTN gateway, an ID of the satellite, cell selection parameters for the S&F mode, or information on an event trigger condition for the S&F mode.

For example, the message may include information on a first successor satellite to provide a service to a first footprint of the satellite, and information on a second successor satellite to provide a service to a second footprint of a target satellite.

In embodiments of the present disclosure, a method performed by a user equipment (UE) for performing a non-terrestrial network (NTN) access is provided. The method may comprise receiving, from a satellite configured to perform functions of an evolved node B (eNB), a message including information related to a store and forward (S&F) mode, and performing communication with the satellite based on the message. The message may include at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

For example, the message may include at least one of information on a paging cycle for the S&F mode, information on a paging frame for the S&F mode, information on a paging occasion for the S&F mode, information on a number of paging monitoring for the S&F mode, or information on a paging radio network temporary identifier (P-RNTI) for the S&F mode.

For example, the message may include at least one of information on a discontinuous reception (DRX) on-duration for the S&F mode, information on a DRX retransmission timer for the S&F mode, information on a DRX inactivity timer for the S&F mode, information on a DRX cycle length for the S&F mode, information on a DRX short cycle timer for the S&F mode, or information indicating whether DRX is supported in the S&F mode.

For example, the message may include at least one of packet data unit (PDU) session information for the S&F mode, evolved packet system (EPS) information, data radio bearer (DRB) information, an ID of the feeder link between the satellite and the NTN gateway, an ID of the satellite, cell selection parameters for the S&F mode, or information on an event trigger condition for the S&F mode.

For example, the message may include information on a first successor satellite to provide a service to a first footprint of the satellite, and information on a second successor satellite to provide a service to a second footprint of a target satellite.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

**Claims**

1.    A device of a satellite for providing a non-terrestrial network (NTN) access, comprising:

memory comprising instructions;
at least one processor; and
at least one transceiver,
wherein the instructions, when executed by the at least one processor, cause the device to:

transmit, to a user equipment (UE), a message including information related to a store and forward (S&F) mode,

perform communication with the UE based on the message, and

wherein the message includes at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

2. The device of claim 1,

wherein the message includes at least one of information on a paging cycle for the S&F mode, information on a paging frame for the S&F mode, information on a paging occasion for the S&F mode, information on a number of paging monitoring for the S&F mode, or information on a paging radio network temporary identifier (P-RNTI) for the S&F mode.

3. The device of claim 1,

wherein the message includes at least one of information on a discontinuous reception (DRX) on-duration for the S&F mode, information on a DRX retransmission timer for the S&F mode, information on a DRX inactivity timer for the S&F mode, information on a DRX cycle length for the S&F mode, information on a DRX short cycle timer for the S&F mode, or information indicating whether DRX is supported in the S&F mode.

4. The device of claim 1,

wherein the message includes at least one of packet data unit (PDU) session information for the S&F mode, evolved packet system (EPS) information, data radio bearer (DRB) information, an ID of a feeder link between the satellite and the NTN gateway, an ID of the satellite, cell selection parameters for the S&F mode, or information on an event trigger condition for the S&F mode.

5. The device of claim 1,

wherein the message includes information on a first successor satellite to provide a service to a first footprint of the satellite and information on a second successor satellite to provide a service to a second footprint of a target satellite.

6. A user equipment (UE) for performing a non-terrestrial network (NTN) access,

comprising:

memory comprising instructions;
at least one processor; and
at least one transceiver,
wherein the instructions, when executed by the at least one processor, cause the UE to:

receive, from a satellite configured to perform functions of an evolved node B (eNB), a message including information related to a store and forward (S&F) mode, and
perform communication with the satellite based on the message, and,
wherein the message includes at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

7. The UE of claim 6,

wherein the message includes at least one of information on a paging cycle for the S&F mode, information on a paging frame for the S&F mode, information on a paging occasion for the S&F mode, information on a number of paging monitoring for the S&F mode, or information on a paging radio network temporary identifier (P-RNTI) for the S&F mode.

8. The UE of claim 6,

wherein the message includes at least one of information on a discontinuous reception (DRX) on-duration for the S&F mode, information on a DRX retransmission timer for the S&F mode, information on a DRX inactivity timer for the S&F mode, information on a DRX cycle length for the S&F mode, information on a DRX short cycle timer for the S&F mode, or information indicating whether DRX is supported in the S&F mode.

9. The UE of claim 6,
wherein the message includes at least one of packet data unit (PDU) session information for the S&F mode, evolved packet system (EPS) information, data radio bearer (DRB) information, an ID of the feeder link between the satellite and the NTN gateway, an ID of the satellite, cell selection parameters for the S&F mode, or information on an event trigger condition for the S&F mode.

10. The UE of claim 6,
wherein the message includes information on a first successor satellite to provide a service to a first footprint of the satellite, and information on a second successor satellite to provide a service to a second footprint of a target satellite.

11. A method performed by a satellite for providing a non-terrestrial network (NTN) access,
comprising:

transmitting, to a user equipment (UE), a message including information related to a store and forward (S&F) mode; and
performing communication with the UE based on the message, and
wherein the message includes at least one of information indicating that the satellite supports the S&F mode, information on a valid time of a service link between the UE and the satellite in the S&F mode, information on a valid time of a feeder link between the satellite and an NTN gateway in the S&F mode, ephemeris information of the satellite, footprint information provided by the satellite, or information on a list of neighbor cells supporting the S&F mode.

12. The method of claim 11,
wherein the message includes at least one of information on a paging cycle for the S&F mode, information on a paging frame for the S&F mode, information on a paging occasion for the S&F mode, information on a number of paging monitoring for the S&F mode, or information on a paging radio network temporary identifier (P-RNTI) for the S&F mode.

13. The method of claim 11,
wherein the message includes at least one of information on a discontinuous reception (DRX) on-duration for the S&F mode, information on a DRX retransmission timer for the S&F mode, information on a DRX inactivity timer for the S&F mode, information on a DRX cycle length for the S&F mode, information on a DRX short cycle timer for the S&F mode, or information indicating whether DRX is supported in the S&F mode.

14. The method of claim 11,
wherein the message includes at least one of packet data unit (PDU) session information for the S&F mode, evolved packet system (EPS) information, data radio bearer (DRB) information, an ID of the feeder link between the satellite and the NTN gateway, an ID of the satellite, cell selection parameters for the S&F mode, or information on an event trigger condition for the S&F mode.

15. The method of claim 11,
wherein the message includes information on a first successor satellite to provide a service to a first footprint of the satellite, and information on a second successor satellite to provide a service to a second footprint of a target satellite.

FIG. 1

FIG. 2A

FIG. 2B

FIG. 3A

FIG. 3B

RADIO FRAME (414)

SLOT (406)

$N_{BW}$ SUBCARRIERS (404)

$N_{SC}^{RB}$ SUBCARRIERS (410)

RESOURCE ELEMENT (412)

RESOURCE BLOCK (408)

$N_{symb}$ OFDM SYMBOLS (402)

FIG. 4

EP 4 757 205 A1

FIG. 5

30

FIG. 6

FIG. 7

800

810

T: DRX Cycle

821

PF: Paging Frame in IDRX cycle

822

PF$_x$: PF for UE

831

PO: Paging Occasions in each PF

832

PO$_x$: PO for UE

FIG. 8A

840

RRC_connected
Active (851)

RRC_connected
DRX (852)

RRC_connected
Active (853)

RRC_idle
DRX (854)

ON
duration

UE RF
ON

Inactivity
Timer

Opportunity
for DRX

Inactivity
Timer

UE RF
OFF

Data
packet

Short DRX
Cycle

Short DRX
Cycle

Long DRX
Cycle

Idle for a
long time

DRX Short Cycle Timer

DRX enabled in
RRC_connected
mode

PDCCH
successfully
decoded

eNB initiates
RRC Connection
release

FIG. 8B

510

TRANSCEIVER (901)

PROCESSOR (903)

MEMORY (905)

FIG. 9

520

TRANSCEIVER (1001)

PROCESSOR (1003)

MEMORY (1005)

FIG. 10

Europäisches Patentamt

European Patent Office

Office européen des brevets

## EUROPEAN SEARCH REPORT

**Application Number**

EP 25 22 1906

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/155091 A1 (SAMSUNG ELECTRONICS CO LTD [KR]) 25 July 2024 (2024-07-25) <br> * paragraph [0145] - paragraph [0163] * <br> * paragraph [0233] - paragraph [0263] * <br> ----- | 1-15 | INV. <br> H04B7/185 |
| X | IGNACIO PASCUAL PELAYO ET AL: "Support for store and forward in IoT NTN", 3GPP DRAFT; R2-2410863; TYPE DISCUSSION; IOT_NTN_PH3-CORE 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, <br> no. Orlando, US; 20241118 - 20241122, 8 November 2024 (2024-11-08), XP052672050, [retrieved on 2024-11-08] <br> * sections 1, 2 * <br> ----- | 1-15 | |
| X | JUHA KORHONEN ET AL: "Report from session on NR NTN and IoT NTN", 3GPP DRAFT; R2-2410913; TYPE REPORT 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, <br> no. Orlando, US; 20241118 - 20241122, 22 November 2024 (2024-11-22), XP052678302, [retrieved on 2024-11-22] <br> * section 8.9.2 * <br> ----- | 1-15 | **TECHNICAL FIELDS SEARCHED (IPC)** <br><br> H04B |
| X | WO 2024/108921 A1 (ZTE CORP [CN]) 30 May 2024 (2024-05-30) <br> * figures 9-18 * <br> * page 14 - page 24 * <br> ----- <br><br> -/-- | 1-15 | |

The present search report has been drawn up for all claims

| Place of search | Date of completion of the search | Examiner |
|---|---|---|
| The Hague | 31 March 2026 | Arroyo Valles, |

EPO FORM 1503 03.82 (P04C01)

| | Europäisches Patentamt<br>European Patent Office<br>Office européen des brevets | **EUROPEAN SEARCH REPORT** | **Application Number**<br>EP 25 22 1906 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUHUA CHEN ET AL: "Support of Store and Forward",<br>3GPP DRAFT; R2-2407018; TYPE DISCUSSION; IOT_NTN_PH3-CORE 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,<br>no. Maastricht, NL; 20240819 - 20240823,<br>9 August 2024 (2024-08-09), XP052639189,<br>[retrieved on 2024-08-09]<br>* sections 1, 2.1 *<br>----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 31 March 2026 | Arroyo Valles, |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................................
& : member of the same patent family, corresponding document

EPO FORM 1503 03.82 (P04C01)

page 2 of 2

EP 4 757 205 A1

## ANNEX TO THE EUROPEAN SEARCH REPORT
## ON EUROPEAN PATENT APPLICATION NO.

EP 25 22 1906

31-03-2026

| Patent document cited in search report | Publication date | Patent family member(s) | Publication date |
|---|---|---|---|
| WO 2024155091 A1 | 25-07-2024 | CN 120569997 A | 29-08-2025 |
| | | EP 4635219 A1 | 22-10-2025 |
| | | GB 2627347 A | 21-08-2024 |
| | | GB 2638364 A | 20-08-2025 |
| | | WO 2024155091 A1 | 25-07-2024 |
| WO 2024108921 A1 | 30-05-2024 | CN 119547558 A | 28-02-2025 |
| | | EP 4537623 A1 | 16-04-2025 |
| | | JP 2025528321 A | 28-08-2025 |
| | | KR 20250025450 A | 21-02-2025 |
| | | US 2025151126 A1 | 08-05-2025 |
| | | WO 2024108921 A1 | 30-05-2024 |

EPO FORM P0459